(19) Europäisches Patentamt
European Patent Office
Office européen des brevets

(11) **EP 1 382 948 B1**

(12) **EUROPÄISCHE PATENTSCHRIFT**

(45) Veröffentlichungstag und Bekanntmachung des Hinweises auf die Patenterteilung:
**01.02.2006 Patentblatt 2006/05**

(51) Int Cl.:
*G01G 19/08* (2006.01)

(21) Anmeldenummer: **03014779.7**

(22) Anmeldetag: **28.06.2003**

(54) **Verfahren zur Ermittlung der Masse eines Fahrzeugs, insbesondere Nutzfahrzeugs**

Method for determining the mass of a motor vehicle, particularly a utility vehicle

Procédé de determination de la masse d'un véhicule automobile, notamment un véhicule utilitaire

(84) Benannte Vertragsstaaten:
**DE FR IT NL SE**

(30) Priorität: **16.07.2002 DE 10232027**

(43) Veröffentlichungstag der Anmeldung:
**21.01.2004 Patentblatt 2004/04**

(73) Patentinhaber: **MAN Nutzfahrzeuge Aktiengesellschaft**
**80976 München (DE)**

(72) Erfinder: **Franke, Olaf, Dipl.-Ing.**
**80935 München (DE)**

(56) Entgegenhaltungen:
**EP-A- 0 932 033**       **WO-A-93/18375**
**DE-A- 4 228 413**

## Beschreibung

Die Erfindung betrifft ein Verfahren zur Ermittlung der Masse eines Fahrzeugs, insbesondere Nutzfahrzeugs, nach dem Oberbegriff des Patentanspruches 1.

Bei einem aus DE-A-42 28 413 bekannten derartigen Verfahren werden in zeitlicher Folge erste und zweite vom Antriebsstrang des Fahrzeugs erbrachte Kräfte und dabei vorhandene erste und zweite Beschleunigungswerte erfasst und daraus die Fahrzeugmasse geschätzt.

Aus WO-A-93 18375 ist eine Vorrichtung zur Ermittlung einer Fahrzeugmasse bekannt, bei der zwei Betriebszustände des Fahrzeugs verglichen werden. Aus mehreren Impulsmessungen wird ein Durchschnittskraftwert für jeden Betriebszustand und die dazugehörige Geschwindigkeit zur Massebestimmung ermittelt.

Aus DE 197 28 769 A1 ist es bekannt, in zeitlicher Folge erste und zweite vom Antriebsstrang des Fahrzeugs erbrachte Kräfte und dabei vorhandene erste und zweite Beschleunigungswerte zu erfassen und hieraus erste und zweite Massenschätzwerte gebildet und miteinander zu vergleichen. Aus dem Vergleich wird eine Fahrbahnneigung bestimmt. Der Massenschätzwert für das Fahrzeug wird nur dann berechnet, wenn keine oder nur eine geringe. Fahrbahnneigung vorliegt.

Ferner ist es aus der DE 38 43 818 C1 bekannt, durch Bestimmung des Fahrwiderstands des Fahrzeugs bei geöffneter Kupplung im Antriebsstrang sowie wiederholter Bestimmung des Motormoments und gleichzeitiger wiederholter Messung der Beschleunigung des Fahrzeugs bei geschlossener Kupplung und unter Berücksichtigung der Getriebeübersetzung einen mittleren Wert der Fahrzeugmasse zu ermitteln.

Aus der DE 197 28 769 A1 ist es zur Ermittlung der Masse eines Kraftfahrzeugs, insbesondere Nutzfahrzeugs bekannt, zu einem ersten Zeitpunkt bei geschlossener Kupplung im Antriebsstrang einen ersten Beschleunigungswert und einen ersten Antriebswert zu erfassen und zu einem zweiten Zeitpunkt bei geöffneter Kupplung einen zweiten Beschleunigungswert zu erfassen und aus dem ersten Beschteunigungswert und dem ersten Antriebswert, falls der zweite Beschteunigungswert in einem vorgegebenen Bereich liegt, den Massenwert des Fahrzeugs zu ermitteln.

Ferner ist es aus der DE 197 24 092 A1 bekannt, zur Ermittlung der Fahrzeugmasse, insbesondere eines Nutzfahrzeugs einen ersten Beschleunigungswert vor Betätigung der Bremseinrichtung und einen zweiten Beschleunigungswert nach Betätigung der Bremseinrichtung zu erfassen und hieraus die Fahrzeugmasse zu bestimmen.

Bei den bekannten Verfahren müssen bestimmte Fahrmanöver durchgeführt werden, um eine Schätzung der Fahrzeugmasse durchführen zu können.

Aufgabe der Erfindung ist es demgegenüber, ein Verfahren der eingangs genannten Art zu schaffen, mit welchem bei während des normalen Fahrbetriebs sich ergebenden Fahrzeuggeschwindigkeitsänderungen auch bei Steigungen und Gefällen ein brauchbarer Schätzwert der Fahrzeugmasse erhalten werden kann.

Diese Aufgabe wird erfindungsgemäß durch die kennzeichnenden Merkmale des; Patentanspruches 1 gelöst.

Bei der Erfindung wird innerhalb eines ersten Mittelungszeitraums ein erster Kraftmittelwert und innerhalb eines nachfolgenden zweiten Mittelungszeitraumes ein zweiter Kraftmittelwert gebildet. Hierzu werden im jeweiligen Mittelungszeitraum die Kräfte, welche die Fahrzeuglängsbewegung beeinflussen, d.h. die über den Antriebsstrang aufgebrachten Längskräfte zyklisch mehrfach abgetastet und für die Kraftmittelwertbildung arithmetisch gemittelt. Ferner wird für den ersten Mittelungszeitraum die sich vom Beginn bis zum Ende des Mittelungszeitraums ergebende Beschleunigung (Geschwindigkeitsänderung) erfasst. Auf diese Weise werden für den ersten Mittelungszeitraum und ersten Kraftmittelwert eine erste Beschleunigung und für den zweiten Mittelungszeitraum und zweiten Kraftmittelwert eine zweite Beschleunigung erfasst. Zur Abschätzung der Fahrzeugmasse wird das Verhältnis von Kraftmittelwertdifferenz zur Beschleunigungsdifferenz gebildet. Diese Verhältnis entspricht im Kraft-/Beschleunigungsdiagramm der Steigung bzw. dem Gradienten einer Geraden, wobei die Steigung bzw. der Gradient das Maß für die Masse ist.

Diese Masseabschätzung kann nicht nur beim Fahren in der Ebene durchgeführt werden, sondern auch bei Steigungen und Gefällen. Es kann eine Masseschätzung mit hinreichender Genauigkeit mit bis zu 10%-Toleranz erreicht werden.

Für die Bildung des Kraftmittelwertes im jeweiligen Mittelungszeitraum werden die Kräfte, welche die Fahrzeugslängsbewegung beeinflussen, zyklisch, beispielsweise mit einem Abtastintervall von 100 ms, abgetastet. Der jeweilige Mittelungszeitraum kann etwa 3 s betragen. Es stehen somit für die Bestimmung des jeweiligen Kraftmittelwertes 30 abgetastete Messwerte zur Verfügung, welche innerhalb des Mittelungszeitraumes ermittelt werden. Kräfte, die nur einen geringen Anteil an der Bildung der Gesamtkraft haben, können im Rahmen einer Näherung vernachlässigt werden. Es handelt sich hier beispielsweise um die Rollreibung, um den Luftwiderstand, um Nebenaggregate und dergleichen. Wichtigster Bestandteil der Längskräfte ist die über den Antriebsstrang aufgebrachte Kraft. Diese setzt sich wie folgt zusammen:

$$F = (M_{Motor} + M_{Motorreibung} + M_{Primärretarder} + M_{Motorbremse}) \frac{\omega_{Motor}}{\upsilon_{Fzg.}} + M_{Sekundärretarder} \frac{\omega_{Abtriebswelle}}{\upsilon_{Fzg.}}$$

Hierbei bedeuten

$M_{Motor}$ =      Motordrehmoment
$M$ =      die jeweiligen Momente
$\omega$ =      die jeweiligen Drehzahlen; und
$\upsilon_{Fzg.}$ =      die Fahrgeschwindigkeit.

Die in obiger Formel enthaltenen Momente sowie die Drehzahlen für den Motor und die Antriebswelle und die Fahrzeuggeschwindigkeit können aus dem Elektronikverbund des Fahrzeugs abgefragt bzw. abgetastet werden. Bei geöffnetem Antriebsstrang, beispielsweise geöffneter Kupplung oder bei Getriebe-Neutral ist der erste Term $M_{Motor}$, welcher die Primärmomente enthält auf Null gesetzt. Wenn die durch die Betriebsbremse aufgebrachten Kräfte nicht genau bekannt sind, wird keine Schätzung durchgeführt. Auch bei stehendem Fahrzeug oder sehr geringer Fahrzeuggeschwindigkeit erfolgt keine Schätzung. Auch im Anfahrvorgang bei schleifender Kupplung ergeben sich verfälschte Schätzwerte.

Anhand der Figuren wird die Erfindung noch näher erläutert.

Es zeigt

Fig. 1 ein Zeit-/Kraftdiagramm, in welchem auf der Abszisse die Zeit und auf der Ordinate die Kraft aufgetragen sind; und

Fig. 2 ein Kraft-Beschleunigungsdiagramm, in welchem auf der Abszisse die Kraft und auf der Ordinate die Beschleunigung aufgetragen sind.

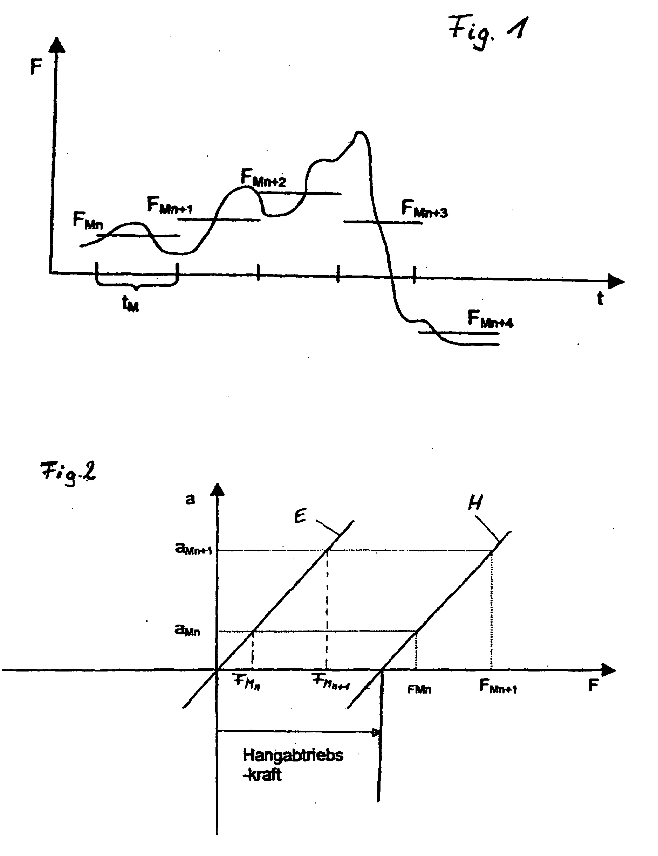

In der Fig. 1 ist ein Beispiel für den zeitlichen Kraftverlauf der über den Antriebsstrang aufgebrachten Längskräfte innerhalb eines Zeitraums dargestellt, in welchem ein normaler Fahrbetrieb stattfindet. Für die Schätzung der Fahrzeugmasse, insbesondere der Gesamtmasse des Fahrzeugs, werden in unmittelbar aufeinanderfolgenden Mittelungszeiträumen $t_M$ Kraftmittelwerte $F_{Mn}$, $F_{Mn+1}$ bis $F_{Mn+4}$ und gegebenenfalls weitere Kraftmittelwerte gebildet. Der jeweilige Kraftmittelwert wird durch zyklisches Auslesen oder Abtasten all der Kräfte, die die Fahrzeuglängsbewegung beeinflussen, insbesondere der aus dem Elektronikverbund lesbaren Momente, welche in oben angegebener Formel enthalten sind, im jeweiligen Mittelungszeitraum $t_M$ und durch arithmetische Mittelung bestimmt. Gleichzeitig wird die zugeordnete Beschleunigung aM, welche sich aus der Geschwindigkeitsänderung zwischen Beginn und Ende des Mittelungszeitraum $t_M$ ergibt, erfasst. Aus jeweils zwei unmittelbar aufeinanderfolgenden Mittelungszeiträumen $t_M$ wird dann nach der folgenden Formel der Massenschätzwert m ermittelt.

$$m = \frac{F_{Mn} - F_{Mn+1}}{a_{Mn} - a_{Mn+1}}$$

Der Masseschätzwert kann mit beliebig innerhalb des normalen Fahrbetriebs in zwei unmittelbar aufeinanderfolgenden Mittelungszeiträumen bestimmten Kraftmittelwerten und zugehörigen Fahrzeugbeschleunigungen bestimmt werden. Hierbei wird vorausgesetzt, dass sich innerhalb der relativ kurzen Mittelungszeiträume von vorzugsweise ca. 3 sec. die Steigung und das Gefälle der Fahrstrecke nicht plötzlich ändert. Geringfügige Ungenauigkeiten, die aus einer Steigungs- oder Gefälleänderung resultieren, können beispielsweise durch Filterung unterdrückt werden.

Masseschätzwerte, welche mit sehr kleiner Beschleunigungsdifferenz $a_{Mn} - a_{Mn+1}$ ermittelt wurden, werden als zu ungenau verworfen. Es werden solche Schätzwerte für die Bestimmung der Fahrzeugmasse verwendet, bei denen die Beschleunigungsänderung von einem Mittelungszeitraum zum unmittelbar nächstfolgenden Mittelungszeitraum ausreichend groß ist.

Die beschriebene Masseschätzung erfolgt sowohl mit positiven als auch mit negativen Momenten oder Kräften. Es ist nicht erforderlich, dass die Momente und Kräfte konstant sind, da eine Mittelung über einen ausreichend bemessenen Mittelungszeitraum beispielsweise ca. 3 sec erfolgt. Auch die dem jeweiligen Mittelungszeitraum zugeordnete Beschleunigung $a_M$ kann sowohl einen positiven als auch negativen Wert (Verzögerung) haben. Ferner können die ermittetten Schätzwerte, ausgehend von einer mittleren Masse über eine Fitterfunktion geglättet bzw. gemittelt werden.

Anhand der Fig. 2 wird die Masseschätzung, wie sie sich aus obiger Formel ergibt, noch näher erläutert. Die Fig. 2 zeigt in einem Kraft-/Beschleunigungsdiagramm zwei Geraden E und H mit bestimmter Steigung. Die Steigung ist das Maß für die geschätzte Fahrzeugmasse. Die durch den Ursprung des Diagramm verlaufende Gerade E vermittelt die Massebewegung in einer Ebene. Bei der Ermittlung der beiden Kraftmittelwerte $F_{Mn}$ und $F_{Mn+1}$ innerhalb zweier unmittelbar aufeinanderfolgender Mittelungszeiträume mit den dazugehörigen Beschleunigungen $a_{Mn}$ und $a_{Mn+1}$ wirkt auf das Fahrzeug keine zusätzliche Längskraft. Die beiden Kraftmittelwerte ergeben sich aus den über den Fahrzeugantriebsstrang aufgebrachten Längskräfte.

Erfolgt der Fahrbetrieb während der Masseabschätzung auf einer Fahrstrecke mit Steigung bzw. Gefälle wirkt eine zusätzliche Längskraft in Form einer Hangabtriebskraft. Dies führt im Kraft-/Beschleunigungsdiagramm zu einer Verschiebung der Geraden, deren Steigung jedoch gleich bleibt. Durch die Gerade H ist dies in der Fig. 2 verdeutlicht. Hieraus ergibt sich, dass für die Abschätzung der Fahrzeugmasse mit Hilfe der oben beschriebenen Merkmale, gemäß denen aus dem Verhältnis der Differenz der beiden Kraftmittelwerte zu der Beschleunigungsdifferenz ein die geschätzte Fahrzeugmasse wiedergebender Gradient ermittelt wird, der unbeeinflusst ist von der Steigung bzw. dem Gefälle der Fahrstrecke.

## Patentansprüche

1. Verfahren zur Ermittlung der Masse eines Fahrzeugs, insbesondere Nutzfahrzeugs, bei dem in zeitlicher Folge erste und zweite vom Antriebsstrang des Fahrzeugs erbrachte Kräfte und dabei vorhandene erste und zweite Beschleunigungswerte erfasst und daraus die Fahrzeugmasse geschätzt wird,

   **dadurch gekennzeichnet, dass**

   - innerhalb eines ersten Mittelungszeitraums ($t_M$) ein erster Kraftmittelwert ($F_{Mn}$) und innerhalb eines zweiten nachfolgenden Mittelungszeitraums ($t_M$) ein zweiter Kraftmittelwert ($F_{Mn+1}$) bestimmt werden, wobei
   - im jeweiligen Mittelungszeitraum ($t_M$) die Kräfte, welche die Fahrzeuglängsbewegung beeinflussen, zyklisch mehrfach abgetastet und für die Kraftmittelwertbildung arithmetisch gemittelt werden,
   - die vom Beginn bis zum Ende des jeweiligen Mittelungszeitraums ($t_M$) sich ergebende erste Beschleunigung ($a_{Mn}$) und zweite Beschleunigung ($a_{Mn+1}$) erfasst werden,
   - wobei die beiden Mittelungszeiträume zeitlich unmittelbar aufeinanderfolgen und gleich lang bemessen werden, und
   - aus dem Verhältnis der Differenz der Kraftmittelwerte zur Beschleunigungsdifferenz die Fahrzeugmasse (m) nach der Formel

$$m = \frac{F_{Mn} - F_{Mn+1}}{a_{Mn} - a_{Mn+1}}$$

   abgeschätzt wird.

2. Verfahren nach Ansprüch 1 **dadurch gekennzeichnet, dass** ein Mittelungszeitraum auf etwa 3 s bemessen wird.

3. Verfahren nach Ansprüch 1 oder 2, **dadurch gekennzeichnet, dass** im Mittelungszeitraum mit Abtastintervallen von etwa 100 ms die jeweiligen Kräfte abgetastet werden.

## Claims

1. Procedure for ascertaining the mass of a vehicle, particularly of a commercial vehicle in which first and second forces generated by the driveline of the vehicle and present first and second acceleration values are recorded in temporal sequence and the vehicle mass is estimated on the basis of them,
   **characterised in that**

• a first force mean value ($F_{Mn}$) is ascertained within a first period of time ($t_M$) for ascertaining the mean value and a second force mean value ($F_{Mn+1}$) is ascertained within a second period of time ($t_M$) for ascertaining the mean value, whereby

• in each period of time ($t_M$) for ascertaining the mean value the forces which influence the vehicle longitudinal movement are cyclically scanned several times and a mean value is arithmetically ascertained for the formation of the force mean value,

• the first acceleration ($a_{Mn}$) and the second acceleration ($a_{Mn+1}$) are recorded from the beginning to the end of each period of time ($t_M$) for ascertaining the mean value, whereby

• the two periods of time for ascertaining the mean value immediately follow each other in time and are of identical duration and

• from the ratio of the difference of the force mean values to the acceleration difference the vehicle mass (m) is estimated on the basis of the formula

$$M = \frac{F_{Mn} - F_{Mn+1}}{a_{Mn} - a_{Mn+1}}$$

2. Procedure according to Claim 1, **characterised in that** a period of time for ascertaining a mean value is computed at approximately 3 secs.

3. Procedure according to Claim 1 or 2, **characterised in that** in the periods of time for ascertaining the mean value the respective forces are scanned at scanning intervals of approximately 100 ms.


**Revendications**

1. Méthode de détermination de la masse d'un véhicule, en particulier d'un véhicule industriel, consistant à saisir successivement la première et la deuxième force fournies par la chaîne cinématique du véhicule et, ce faisant, la première et la deuxième valeur d'accélération et d'évaluer la masse du véhicule,
**caractérisée en ce que**

- une première valeur moyenne de la force ($F_{Mn}$) est déterminée au cours d'un premier laps de temps ($t_M$) et une deuxième valeur moyenne de la force ($F_{Mn+1}$) est déterminée au cours d'un deuxième laps de temps subséquent ($t_M$),
- les forces influençant le mouvement longitudinal du véhicule sont analysées plusieurs fois de manière cyclique au cours du laps de temps correspondant ($t_M$) et servant de base arithmétique pour calculer la valeur moyenne des forces,
- la première accélération ($a_{Mn}$) et la deuxième accélération ($a_{Mn+1}$) en résultant du début à la fin de chaque laps de temps ($t_M$) sont saisies,
- les deux laps de temps se succèdent immédiatement dans le temps et sont de même longueur et
- la masse du véhicule (m) est évaluée à partir du quotient de la différence des valeurs moyennes de la force et de la différence d'accélération, selon la formule

$$m = \frac{F_{Mn} - F_{Mn+1}}{a_{Mn} - a_{Mn+1}}$$

2. Méthode selon la revendication 1, **caractérisée en ce qu'**un laps de temps dure environ 3 s.

3. Méthode selon la revendication 1 ou 2, **caractérisée en ce que** chaque force est analysée au cours du laps de temps à des intervalles d'environ 100 ms.

Fig. 1

Fig. 2